# EUROPÄISCHE PATENTANMELDUNG

(11) **EP 2 851 147 A2**
(43) Veröffentlichungstag der Anmeldung: **25.03.2015**
(21) Anmeldenummer: 14002008.2
(22) Anmeldetag: 23.06.2010
(51) Int. Cl.: B23B 27/10, B23B 31/11, B23C 5/10, B23C 5/28, B23D 77/00, B23D 77/02, B23Q 11/10

(54) **Wechselkopfhalter, Werkzeugkopf und verfahren**

(30) Priorität: 24.06.2009 DE 102009030470
(62) Teilanmeldung aus: 10725479.9
(71) Anmelder: Johne + Co. Präzisionswerkzeuge GmbH, 46286 Dorsten (DE)
(72) Erfinder: Johne, Frank, 46286 Dorsten (DE)
(74) Vertreter: Grosse Schumacher Knauer von Hirschhausen

(57) **Zusammenfassung**

Wechselkopfhalter-System (20) zur Spindelaufnahme in einer rotierbaren Spindel, mit einem, eine konische Werkzeugaufnahme (3.1) und eine Mitnehmervorrichtung (8) aufweisenden Wechselkopfhalter (3), und einem in die konische Werkzeugaufnahme (3.1) einsetzbaren Werkzeugkopfelement (9) mit einer Durchbohrung für eine zentrale Befestigungsschraube (10), wobei die zentrale Befestigungsschraube ein Kühlmittelkanal aufweisen kann und der Wechselkopfhalter (3) eine Kühlmittel-Bohrung (1) zum Zuführen eines Kühlfluides für ein Innenkühlsystem aufweist, und im Bereich der konischen Werkzeugaufnahme (3.1) eine radiale Kühlmittelbohrung (11) von der längsaxialen Kühlmittel-Bohrung (1) zum Rand des Wechselkopfhalters (3) ausgebildet ist, die ein Außenkühlsystem bildet, und wobei ein Kühlsystem-Wechselmittel zum Umbauen des Wechselkopfhalter-Systems auf Innen- oder Außenkühlsystem vorgesehen ist.

Das Kühlsystem-Wechselmittel ist so ausgebildet, dass der Umbau des Wechselkopfhalter-Systems auf Innen- oder Außenkühlsystem lediglich durch Austausch der zentralen Befestigungsschraube (10) mit einem zu wählenden Sperrmittel bei gespannt in der Spindel einer Werkzeugmaschine verbleibendem Wechselkopfhalter (3) oder Wechselkopfhalter-System (20) mit Werkzeugkopfelement (9) ausführbar ist.

## Beschreibung

Die Erfindung bezieht sich auf einen Wechselkopfhalter zur Aufnahme in der rotierbaren Spindel einer Werkzeugmaschine, auf einen Werkzeugkopf zum Einsetzen in den Wechselkopfhalter sowie auf ein Verfahren zur Auswahl eines Kühlsystems für den in den Wechselkopfhalter eingesetzten Werkzeugkopf.

Es sind Wechselkopfhalter bekannt, die mit Hilfe eines Konus-Einspannsitzes die Befestigung auswechselbarer Werkzeugköpfe ermöglichen. Dadurch werden die Verschleißteile kleiner und kostengünstiger herstellbarer. Die auswechselbaren Werkzeugköpfe sind dabei mit einer zentralen Bohrung ausgestattet, durch die in den Körper des Wechselkopfhalters eine Befestigungsschraube eingeschraubt wird, die den Werkzeugkopf in den Konus-Einspannsitz kraftschlüssig hineinpresst und in diesem hält. Das Gewinde der Befestigungsschraube ist dabei entgegen der Werkzeugdrehrichtung ausgebildet, um ein Selbstlösen der Befestigungsschraube zu verhindern.

Die bekannten Wechselkopfhalter weisen ferner Einrichtungen zur Kühlmittelzuführung auf, die durch eine im Wechselkopfhalter ausgebildete Bohrung ein Kühlmittel zum Werkzeugkopf zuführen. Dabei gibt es eine zentrale, innere Kühlmittelzuführung durch eine Teildurchbohrung in der Befestigungsschraube und wahlweise eine äußere Kühlmittelzuführung zum seitlichen Rand bzw. zu einem Beabstandungsspalt unmittelbar unterhalb des Werkzeugkopfes. Das Außenkühlsystem umfasst schräg angesetzte, an die axiale Bohrung angeschlossene, umlaufend verteilt angeordnete Kanäle. Das Umschalten zwischen den beiden Kühlsystemen ist recht kompliziert nur mit einigen Bestandteilen im Inneren des Wechselkopfhalters ausführbar und erfordert eine Herausnahme des Wechselkopfhalters aus der Spindel der Werkzeugmaschine, wenn der Werkzeugkopf, z. B. wegen eines Verschleißes oder aus technologischen Gründen während der Bearbeitung eines Werkstückes, ausgetauscht werden muss. Bei hochpräziser Fertigung kommt es dabei darauf an, dass der Wechselkopfhalter mit dem Werkzeugkopf sehr genau auszentriert eingespannt wird, da jede zwischenzeitliche Entnahme und Wiedereinspannung des Werkzeuges eine erneute Auszentrierung erforderlich macht, die entsprechend zeitaufwendig und kostenintensiv ist.

Die verwendeten Werkzeugköpfe sind ferner als mehrstückig zusammengesetzte Werkzeuge ausgeführt, wobei eine Vielzahl von Hartmetalleinsätzen an einem Halterkörper befestigt werden. Diese müssen anschließend rundlaufend geschliffen werden, sodass auch der Schleifvorgang kostenintensiv sein kann.

Der Erfindung liegt von daher die Aufgabe zugrunde, einen Wechselkopfhalter zu schaffen, der einen Wechsel des Werkzeugkopfes und eine Auswahl des Kühlsystems zwischen einem Innen- und einem Außenkühlsystem an einem in der Spindel einer Werkzeugmaschine eingespannten und auszentrierten Wechselkopfhalter zu ermöglicht, um dadurch Werkzeug-Umrüstzeiten zu verkürzen und die Effizienz der Kühlung zu verbessern.

Die Erfindung geht von einem Wechselkopfhalter zur Aufnahme in der rotierbaren Spindel einer Werkzeugmaschine aus. Der Wechselkopfhalter ist mit einer konischen Werkzeugaufnahme versehen und mit wenigstens einem auswechselbaren, in die konische Werkzeugaufnahme mittels eines konischen Schaftes einsetzbaren Werkzeugkopf mit einer axialen Durchbohrung für eine zentrale Befestigungsschraube ausgebildet. Die zentrale Befestigungsschraube kann einen Kühlmittelkanal aufweisen. Der Wechselkopfhalter weist bevorzugt eine axiale Kühlmittel-Bohrung zum Zuführen eines Kühlfluides für ein Innenkühlsystem auf. Im Bereich der konischen Werkzeugaufnahme ist wenigstens eine von der axialen Kühlmittel-Bohrung zum vorderen Rand des Wechselkopfhalters geführte schräg-radiale Kühlmittel-Bohrung ausgebildet, die ein Außenkühlsystem bildet. Ferner ist ein Kühlsystem-Wechselmittel zum Umbauen des Wechselkopfhalters auf eine Innen- oder eine Außenkühlung vorgesehen.

Die Aufgabe der Erfindung wird dadurch gelöst, dass das Kühlsystem-Wechselmittel so ausgebildet ist, dass der Umbau des Wechselkopfhalters auf Innen- oder Außenkühlung durch einen Austausch der zentralen Befestigungsschraube mit einem zu wählenden Sperrmittel bei gespannt in der Spindel einer Werkzeugmaschine verbleibendem Wechselkopfhalter mit eingesetztem Werkzeugkopf ausführbar ist.

Vorzugsweise ist der Kühlmittelkanal als eine durchgehende axiale Bohrung in der zentralen Befestigungsschraube ausgebildet, wodurch diese mit der axialen Kühlmittel-Bohrung des Wechselkopfhalters durchgehend verbunden und das Kühlmittel direkt zum Werkzeugkopf durchgeleitet ist. Hierbei wird ferner die Länge der zentralen Befestigungsschraube so vorgegeben, dass diese bis zum Beginn eines zylindrischen Kanalabzweigungs-Abschnittes der axialen Kühlmittel-Bohrung des Wechselkopfhalters reicht, wobei in dem Kanalabzweigungs-Abschnitt die wenigstens eine radiale Kühlmittelbohrung des Außenkühlsystems beginnt. Hierdurch wird in dieser kombinierten Kühlsystem-Auswahlanordnung des Kühlsystem-Wechselmittels das Kühlmittel zum Werkzeugkopf gleichzeitig über die Innen- und die Außenkühlsysteme zugeleitet.

Ein erstes Sperrmittel ist gemäß einer bevorzugten Ausführungsform der Erfindung als eine Sperrhülse mit durchgehender axialer Bohrung ausgebildet und optional durch die axiale Kühlmittel-Bohrung und durch die axiale Durchbohrung des Werkzeugkopfes für die zentrale Befestigungsschraube einsetzbar. Dabei ist die Sperrhülse in dem zylindrischen Kanalabzweigungs-Abschnitt der axialen Kühlmittel-Bohrung des Wechselkopfhalters anordenbar und hierdurch die wenigstens eine radiale Kühlmittelbohrung versperrt. Die Sperrhülse ist außerdem im Kanalabzweigungs-Abschnitt zwischen einer Anstoßabstufung und dem Ende der eingeschraubten, zentralen Befestigungsschraube positionierbar, sodass in dieser Innenkühlsystem-Auswahlanordnung des Kühlsystem-Wechselmittels das Kühlmittel ausschließlich zentral durch die axiale Bohrung der zentralen Befestigungsschraube direkt zum Werkzeugkopf durchgeleitet ist.

In einer alternativen Ausführungsform der Erfindung ist die axiale Bohrung der zentralen Befestigungsschraube ebenso durchgehend ausgeführt, wodurch diese mit der axialen Kühlmittel-Bohrung des Wechselkopfhalters durchgehend verbunden ist und das Kühlmittel direkt zum Werkzeugkopf durchgeleitet wird. Jedoch ist hierbei die Länge der zentralen Befestigungsschraube so vorgegeben, dass diese durch einen zylindrischen Kanalabzweigungs-Abschnitt der axialen Kühlmittel-Bohrung des Wechselkopfhalters erstreckt ist und dadurch selbst ohne eine einzusetzenden Hülse ein alternatives zweites Sperrmittel ausbildet. In dem Kanalabzweigungs-Abschnitt beginnt, wie in der vorherigen Ausführungsform, die wenigstens eine radiale Kühlmittelbohrung des Außenkühlsystems, die somit versperrt ist, sodass in dieser Innenkühlsystem-Auswahlanordnung des Kühlsystem-Wechsel-mittels das Kühlmittel ausschließlich über das Innenkühlsystem zentral zugeleitet ist.

Ein drittes Sperrmittel ist als eine geschlossene zentrale Befestigungsschraube ausgebildet und optional anstelle einer der vorher beschriebenen Befestigungsschrauben einsetzbar, wobei das erste bzw. zweite Sperrmittel vorher entfernt ist, sodass in dieser Außenkühlsystem-Auswahlanordnung des Kühlsystem-Wechselmittels das Kühlfluid nur radial durch die wenigstens eine radiale Kühlmittelbohrung radial zum Werkzeugkopf durchgeleitet ist.

Der Werkzeugkopf ist außerdem bevorzugt einstückig ausgebildet. Alternativ kann jedoch der Werkzeugkopf auch mehrstückig ausgebildet sein, wobei Schneidelemente aus Hartmetall ausgebildet sind.

In weiteren bevorzugten Ausführungsformen ist der erfindungsgemäße Werkzeugkopf aus Hartmetall oder Keramik ausgebildet.

Der Werkzeugkopf ist ferner bevorzugt aus einem gepressten Pulverstoff nach einer der verfügbaren Technologien einstückig ausgebildet. Es kann Sinter-Metallpulver oder Hartmetallpulver verwendet werden.

Mit dem erfindungsgemäßen Wechselkopfhalter kann der Werkzeugkopf als ein Werkzeug zum Reiben, Bohren, Senken oder Fräsen ausgebildet und verwendet werden, wobei insbesondere beim Reiben auch die Vorzüge einer verbesserten Kühlung deutlich in Erscheinung treten.

Der erfindungsgemäße Wechselkopfhalter weist bevorzugt einen zylindrischen oder konusförmigen Schaft zur Aufnahme in der Spindel einer Werkzeugmaschine auf. Ferner können Mittel zum genauen Auszentrieren vorhanden sein.

Die konische Werkzeugaufnahme des Wechselkopfhalters und der konische Schaft des einsetzbaren Werkzeugkopfes sind miteinander nur entlang ihrer konischen Oberflächen in Berührung, sodass die Spannfunktion immer gewährleistet ist.

Der Verjüngungswinkel der konischen Werkzeugaufnahme des Wechselkopfhalters und des konischen Schaftes des einsetzbaren Werkzeugkopfes beträgt bevorzugt zwischen 10° und 14°, bevorzugt 12°.

Der Wechselkopfhalter ist in eine Anzahl verschieden dimensionierter Wechselkopfhalter eingeteilt, sodass der Durchmesser des Werkzeugkopfes in Bereichen von 4 bis 32 mm, bevorzugt 6 bis 24 mm, ausgebildet sein kann.

In einer weiteren Ausführungsform ist auf einen Gewindeabschnitt der Befestigungs-schraube ein Gewindering aufgeschraubt und unmittelbar unterhalb des konischen Schaftes des Werkzeugkopfes auf dem Gewindeabschnitt festgelegt, wobei für den Gewindering unterhalb des Werkzeugkopfes ein Freiraum ausgebildet ist. Der Gewindering dient zum Lösen der Kegelverbindung zwischen der konischen Werkzeugaufnahme des Wechselkopfhalters und dem konischen Schaft des Werkzeugkopfes beim Herausnehmen des Werkzeugkopfes aus dem Wechselkopfhalter.

Weiterhin ist am Umfang des oberen Endes des Wechselkopfhalters und im Bereich des konischen Schaftes des Werkzeugkopfes mindestens ein Mitnehmerstift als Verdrehsicherung radial in die konische Werkzeugaufnahme eingesetzt, wobei in den konischen Schaft des Werkzeugkopfes eine den Mitnehmerstift aufnehmende axiale Nut eingebracht ist.

Nach einer weiteren erfindungsgemäßen Ausführungsform der Erfindung wird ein preiswert herstellbarer Werkzeugkopf für den Wechselkopfhalter nach einer der vorhergehend beschriebenen Ausführungsformen dadurch geschaffen, dass der Werkzeugkopf aus einem gepressten und/oder gesinterten Pulverstoff einstückig ausgebildet ist. Bei diesem Werkzeugkopf wird besonderer Wert darauf gelegt, dass der Schleifaufwand gering und der Vorfertigungsgrad dadurch sehr hoch gehalten wird. Dadurch ist ein nur minimaler Schleifaufwand nötig, der dazu beiträgt, die Verschleißteile, hier den Werkzeugkopf, so preiswert wie möglich herstellen zu können.

Die axiale Durchbohrung im Werkzeugkopf ist vorzugsweise jeweils von beiden Seiten von außen nach innen verjüngt ausgebildet, um dadurch eine leichte Entformbarkeit des gepressten Werkzeugkopfes zu gewährleisten, wobei der jeweilige Gesamtverjüngungswinkel zwischen 0,5° und 12°, bevorzugt zwischen 0,5° und 2°, vorgegeben ist.

Im erfindungsgemäßen Werkzeugkopf ist außerdem eine radial von außen ausgebildete Mitnehmernut vorgesehen, die von außen nach innen verjüngt ausgebildete Seitenwandungen aufweist, um dadurch eine leichte Entformbarkeit des gepressten Werkzeugkopfes bei der Herstellung zu gewährleisten. Der Verjüngungswinkel ist bevorzugt zwischen 0,5° und 5°, bevorzugt zwischen 1° und 2°, vorgegeben.

Wenn der Werkzeugkopf als ein rechteckiges Element ausgebildet wird, dann sind vorzugsweise mindestens drei Seiten der Nut, wie oben beschrieben, verjüngt ausgebildet, wobei die vierte Seite dann zumindest senkrecht ausgebildet ist.

Die Hüllradien betragen an den Kreisrandkanten des Werkzeugkopfes bevorzugt zwischen 0,2 und 1,0 mm, was ebenso zu einer verbesserten Entformbarkeit beiträgt.

Die Erfindung betrifft ferner ein Verfahren zur Auswahl des Kühlsystems eines Wechsel-kopfhalters nach einer der vorhergehend beschriebenen Ausführungsformen bei einem in der Spindel einer Werkzeugmaschine eingespannten und auszentrierten Wechselkopfhalter.

Dabei werden die zentrale Befestigungsschraube mit einem Schraubwerkzeug herausgeschraubt und dann wahlweise ein erstes, zweites oder drittes Sperrmittel eingesetzt und die gewählte Befestigungsschraube eingeschraubt, sodass eines von den drei Kühlsystemeinstellungen vorgegeben wird:
a) nur das Innenkühlsystem,
b) nur das Außenkühlsystem, oder
c) das Innen- und das Außenkühlsystem,
wobei der Werkzeugkopf in dem durch Konussitz-Verbindung bewirkten kraftschlüssigen Sitz im Wechselkopfhalter unverschoben verbleibt oder optional der Werkzeugkopf ausgetauscht wird.

Das erfindungsgemäße Innenkühlsystem ist unter anderem besonders vorteilhaft bei der Bearbeitung von Sacklochbohrungen anwendbar. Ein weiterer Punkt der Kosteneinsparung und Vereinfachung besteht darin, dass die Befestigungsschrauben einfache DIN- Schrauben sind, die entweder als Standardschrauben oder als durchbohrte Schrauben eingesetzt werden.

Weitere bevorzugte Ausführungsformen der Erfindung ergeben sich aus den übrigen, in den Unteransprüchen genannten Merkmalen.

Die Erfindung ist nachfolgend anhand mehrerer, in den anliegenden Zeichnungen dargestellter Ausführungsformen von Wechselkopfhaltern näher erläutert. Es zeigt:
- Fig. 1: einen perspektivischen Längsschnitt durch den Wechselkopfhalter in der ersten Ausführungsform mit eingeschraubter, in der Längsachse durchbohrter Befestigungsschraube und ohne Sperrhülse, d. h. mit aktiv geschalteten Innen- und Außenkühlsystemen,
- Fig. 2: einen perspektivischen Längsschnitt durch den Wechselkopfhalter in der zweiten Ausführungsform mit eingeschraubter, in der Längsachse durchbohrter Befestigungsschraube und in die Längsbohrung im Wechselkopfhalter eingesetzter Sperrhülse, d. h. mit aktiv geschaltetem Innenkühlsystem,
- Fig. 3: eine perspektivische Ansicht des gesamten Wechselkopfhalters nach Fig. 1 oder 2 ohne eingesetzten Werkzeugkopf,
- Fig. 4: eine perspektivische Ansicht des vollständigen Wechselkopfhalters nach Fig. 1 oder 2 mit eingesetztem Werkzeugkopf,
- Fig. 5: einen perspektivischen Längsschnitt durch den Wechselkopfhalter in der dritten Ausführungsform mit eingeschraubter, nicht durchbohrter, zentraler Befestigungsschraube, d. h. mit aktiv geschaltetem Außenkühlsystem,
- Fig. 6: einen Längsschnitt durch den Wechselkopfhalter für alle drei bisherigen Ausführungsformen, jedoch ohne zentrale Befestigungsschraube für den Werkzeugkopf,
- Fig. 7: einen Längsschnitt durch den Wechselkopfhalter in der vierten Ausführungsform mit einer auf dem Gewinde der Befestigungsschraube befindlichen Drückmutter,
- Fig. 8: das vergrößerte Detail X aus Fig. 7,
- Fig. 9: eine Ansicht des Wechselkopfhalters in der fünften Ausführungsform,
- Fig. 10: den Längsschnitt A - A aus Fig. 9,
- Fig. 11: den Teillängsschnitt D - D in Fig. 9,
- Fig. 12: das Detail Y aus Fig. 10 und
- Fig. 13: den Querschnitt C - C aus Fig. 9.

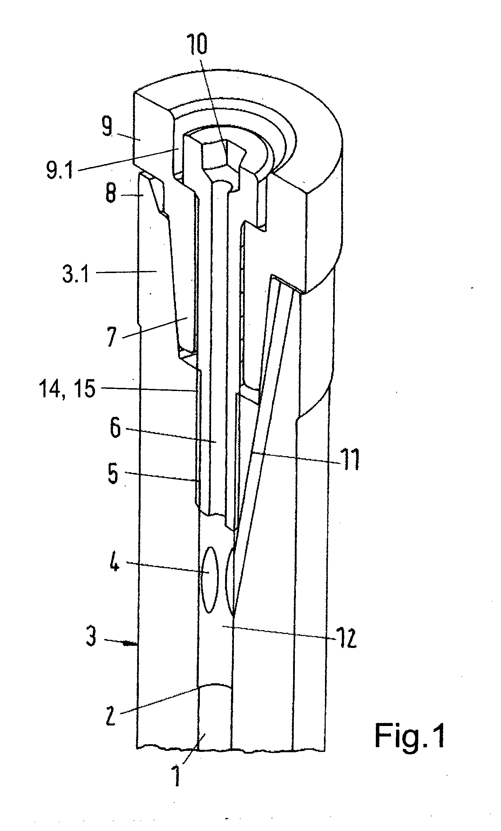

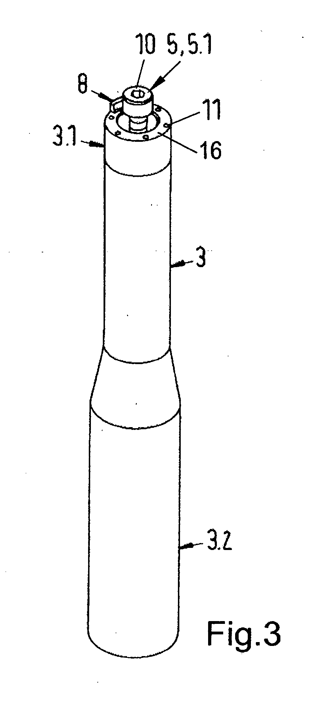

Die Fig. 1 zeigt einen perspektivischen Längsschnitt durch den Wechselkopfhalter 3 in der ersten Ausführungsform mit gleichzeitig aktiv zugeschalteten Innen- und Außenkühlsystemen. Der Wechselkopfhalter 3 umfasst einen in diesem kraftschlüssig eingespannten Werkzeugkopf 9 am oberen Ende und einen zylindrischen Schaft 3.2 (Fig. 3) am unteren Ende, der zum Einspannen in der Spindel einer Werkzeugmaschine vorgesehen ist.

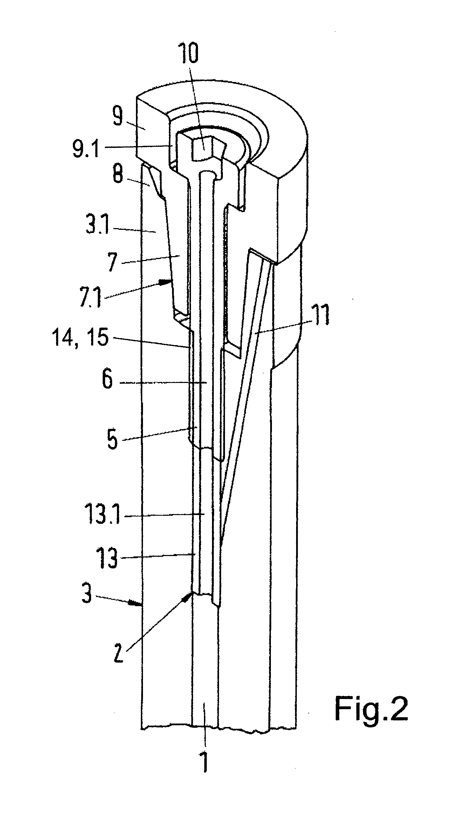

Der Werkzeugkopf 9 ist in Fig. 1 und 2 schematisch mit einer zylindrischen Oberfläche als ein Reibwerkzeug darstellt. Die zylindrischen und/oder stirnseitigen Oberflächen können auch Schneid- oder andere Reibwerkzeuge aufweisen.

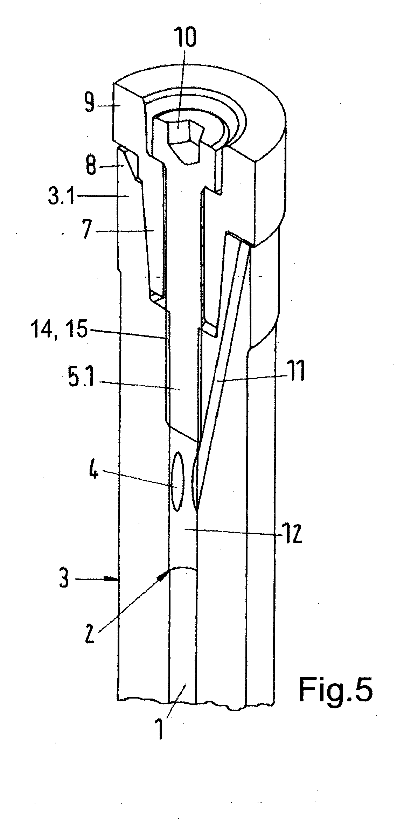

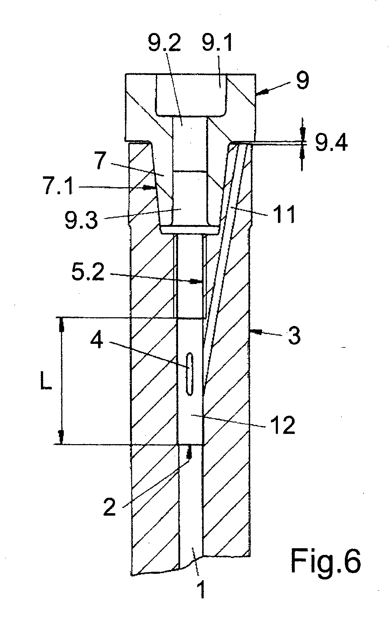

Der Werkzeugkopf 9 weist in der ersten und in der zweiten Ausführungsform nach Fig. 1 bzw. 2 eine mit einer axialen Bohrung 6 versehene axial durchbohrte Befestigungsschraube 5 und in der in Fig. 5 dargestellten dritten Ausführungsform eine durchgängig verschlossene Befestigungsschraube 5.1 auf. In der Fig. 6 ist der Werkzeugkopf 9 ohne jede Befestigungsschraube dargestellt, um die axialen Durchbohrungen 9.2, 9.3 zu zeigen, die in bevorzugten Weise zwei zueinander zulaufende Verjüngungen von etwa 1° bis 2° aufweisen.

Der Werkzeugkopf 9 ist mit Hilfe der Befestigungsschraube 5 in einer im Wechselkopfhalter 3 ausgebildeten konischen Werkzeugaufnahme 3.1 mittels seines konischen Schaftes 7 kraftschlüssig durch einen dadurch ausgebildeten Konus-Spannsitz befestigt. Der Verjüngungswinkel der konischen Oberfläche 7.1 ist bevorzugt im Winkelbereich von 12° vorgegeben, wodurch der konische Schaft 7 relativ lang ist.

Die Berührung des Wechselkopfhalters 3 und des Werkzeugkopfes 9 ist lediglich entlang der konischen Oberfläche 7.1 vorgesehen, sodass dadurch kein Aufsetzen von planen Flächen die Konussitz-Verbindung beeinträchtigt ist.

Die Befestigungsschraube 5 hat einen Inbusschraubenkopf 10, der in einer Schraubenkopfvertiefung 9.1 des Werkzeugkopfes 9 versenkt ist, sodass dieser keiner Berührung mit dem Werkstück ausgesetzt ist. Bei kleinen Werkzeugköpfen 9, die nur seitliche zylindrische Werkzeugelemente aufweisen, kann auf die Schraubenkopfvertiefung 9.1 verzichtet werden.

Die Befestigungsschraube 5 weist in der ersten Ausführungsform nach Fig. 1 eine durchgehende axiale Bohrung 6 auf, die als Kühlmittelkanal dient und direkt in die im Wechselkopfhalter 3 zentral ausgebildete axiale Kühlmittel-Bohrung 1 mündet. Die Befestigungsschraube 5 weist an ihrem Ende einen Gewindeabschnitt 14 auf, der in einem entsprechenden Gewindeabschnitt 15 der axialen Kühlmittel-Bohrung 1 eingeschraubt ist.

Die Länge der Befestigungsschraube 5 ist so vorgegeben, dass diese bis zum Beginn eines in der axialen Kühlmittel-Bohrung 1 ausgebildeten Kanalabzweigungs-Abschnittes 12 reicht. In diesem Kanalabzweigungs-Abschnitt 12 befinden sich die Mündungen 4 einer Vielzahl von unter einem Neigungswinkel ausgebildeten schräg-radialen Kühlmittelbohrungen 11, die bis zum vorderen Rand 16 des Wechselkopfhalters 3 durchgebohrt sind. Diese radialen Kühlmittelbohrungen 11 bilden das Außenkühlsystem, durch welches ein Kühlmittel bis unter den Rand 17 des Werkzeugkopfes 9 in den Spalt 9.4 gepumpt werden kann (Fig. 6).

In der ersten Ausführungsform gemäß Fig. 1 sind sowohl das Außen- als auch das Innenkühlsystem aktiv zugeschaltet, was insbesondere bei Reibbearbeitung eine besonders gute Versorgung mit Kühl- und/oder Schmiermittel gewährleistet.

Der Kanalabzweigungs-Abschnitt 12 weist eine vorgegebene Länge L auf und endet in einer Anstoßabstufung 2 (Fig. 1 und 2), die dafür vorgesehen ist, ein erstes Sperrmittel in Form einer in Fig. 2 dargestellten Sperrhülse 13 gemäß der zweiten Ausführungsform des Wechselkopfhaltes 3 zu positionieren. Anstelle der Anstoßabstufung 2 kann eine konusförmige Ausbildung des Kanalabzweigungs-Abschnittes 12 vorgenommen werden.

Ferner kann auch auf die Sperrhülse 13 ganz verzichtet werden, da die Sperrhülse 13 bei einer zumeist vertikalen Einspannung des Wechselkopfhalters 3 in einer Werkzeugmaschine unter ihrem eigenen Gewicht und der Fließreibung des Kühlmittels gegen die Befestigungsschraube 5 gedrückt wird.

Die Fig. 2 zeigt einen perspektivischen Längsschnitt durch den Wechselkopfhalter 3 in der zweiten Ausführungsform nur mit aktiv geschaltetem Innenkühlsystem. Hierfür ist die das erste Sperrmittel bildende Sperrhülse 13 in dem Kanalabzweigungs-Abschnitt 12 der axialen Kühlmittel-Bohrung 1 positioniert. Die Sperrhülse 13 versperrt mit ihrem zylindrischen Hülsenkörper die seitlichen Mündungen 4 der abzweigenden radialen Kühlmittelbohrungen 11 und verbindet mittels der in der Sperrhülse 13 ausgebildeten zentralen axialen Bohrung 13.1 die axiale Bohrung 6 der Befestigungsschraube 5 mit der axialen Kühlmittel-Bohrung 1 des Wechselkopfhalters 3.

Die Länge der Sperrhülse 13 ist derart vorgegeben, dass diese in dem Kanalabzweigungs-Abschnitt 12 mit einem ausreichenden Spiel positioniert ist. Das Spiel ist notwendig, um dadurch der Befestigungsschraube 5 zu ermöglichen, die Konussitz-Verbindung des Werkzeugkopfes 9 vollständig mit einer Haltekraft zu beaufschlagen. Ferner kann dieser Spalt auch einem Ausgleich eventuell unterschiedlicher thermischer Ausdehnungen der Sperrhülse 13 und des Wechselkopfhalters 3 dienen.

Die Fig. 3 zeigt eine perspektivische Ansicht des gesamten Wechselkopfhalters 3 jedoch ohne den Werkzeugkopf 9. Hierbei sind die am Rand 16 des Wechselkopfhalters 3 mündenden schräg-radialen Kühlmittelbohrungen 11 gezeigt, die in einer Vielzahl kreisumlaufend im stirnseitigen Rand 16 des Wechselkopfhalters 3 ausgebildet sind. Ferner ist auch ein zapfenartig den Rand 16 des Wechselkopfhalters 3 überragender Mitnehmer 8 dargestellt, der einstückig mit dem Wechselkopfhalter 3 ausgebildet ist und der dazu dient, den in diesem eingespannten Werkzeugkopf 9 gegen eine Verdrehung zu sichern.

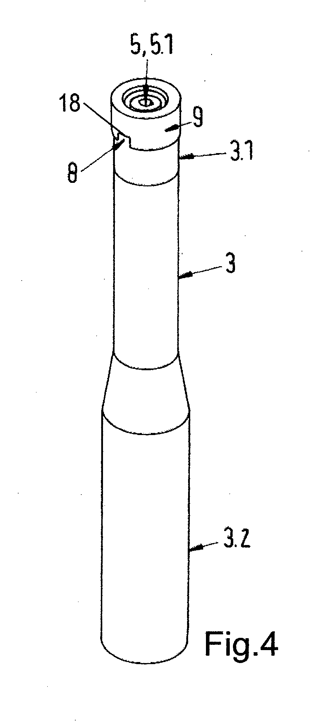

Die Fig. 4 zeigt eine perspektivische Ansicht die vollständige Anordnung des Wechselkopfhalters 3 mit eingespanntem Werkzeugkopf 9. Der Mitnehmer 8 greift hierbei in eine im Werkzeugkopf 9 ausgebildete Mitnehmernut 18 ein und hält diesen dadurch fest, sodass der Werkzeugkopf 9 ein verlustfrei übertragenes Drehmoment erhalten kann.

Der Mitnehmer kann nur bei Kegelverbindungen von α/2 kleiner 3° zwischen der konischen Werkzeugaufnahme 3.1 des Wechselkopfhalters 3 und dem konischen Schaft 7 des Werkzeugkopfes 9 entfallen.

Die Fig. 5 zeigt einen perspektivischen Längsschnitt durch den Wechselkopfhalter 3 in der dritten Ausführungsform mit aktiv geschaltetem Außenkühlsystem. Hierbei ist die längs-durchbohrte Befestigungsschraube 5 durch eine ein drittes Sperrmittel bildende, verschlossene Befestigungsschraube 5.1 ohne eine axiale Bohrung 6 ausgetauscht worden. Ferner ist eine eventuell im Kanalabzweigungs-Abschnitt 12 vorher positionierte Sperrhülse 13 entfernt worden. Das Kühlmittel wird hierbei nur durch die axial-radialen Kühlmittelbohrungen 11 geleitet. Somit benötigt ein Kühlsystem-Wechselmittel-Satz nur eine Sperrhülse 13, eine verschlossene Befestigungsschraube 5.1 (Fig. 5) und eine kurze, durchbohrte Befestigungsschraube 5 (Fig. 1, 2).

In einer nicht gezeigten alternativen Ausführungsform kann bei den ersten und zweiten Ausführungsformen nach Fig. 1 bzw. Fig. 2 anstelle der ein erstes Sperrmittel bildenden Sperrhülse 13 (Fig. 2) eine entsprechend länger ausgebildete, axial durchbohrte Befestigungsschraube 5 als zweites Sperrmittel verwendet werden, die als eine Verbindung einer kurzen Befestigungsschraube 5 (Fig. 1, 2) mit einer Sperrhülse 13 ausgebildet sein kann. Dann besteht der Kühlsystem-Wechselmittel-Satz nur aus drei Befestigungsschrauben: einer kurzen und einer langen durchbohrten Befestigungsschraube 5 und einer kurzen verschlossenen Befestigungsschraube 5.1.

Die Fig. 6 zeigt einen Längsschnitt durch den Wechselkopfhalter 3 mit eingespanntem Werkzeugkopf 9, jedoch ohne eine Befestigungsschraube 5, 5.1. Der Werkzeugkopf 9 bleibt in seinem Konus-Spannsitz infolge der Konuseinspannung kraftschlüssig eingespannt. Das gewünschte Kühlsystem kann nun mit Hilfe des Kühlsystem-Wechselmittel-Satzes ausgewählt werden. Alternativ kann vorher auch der Werkzeugkopf 9 ausgewechselt werden, wobei in beiden Fällen der Wechselkopfhalter 3 in der Spindel einer Werkzeugmaschine eingespannt und auszentriert verbleiben kann, wodurch der Aufwand für eine Wiedereinspannung und Auszentrierung entfällt.

Der Spalt 9.4 (Fig. 6) zwischen dem oberen Rand 16 des Wechselkopfhalters 3 und dem unteren Rand 17 des Werkzeugkopfes 9 dient einerseits der Kühlmittelzufuhr durch die schräg-radialen Kühlmittelbohrungen 11 und andererseits sorgt dieser dafür, dass der Werkzeugkopf 9 nicht auf der planen Fläche des stirnseitigen Randes 16 des Wechselkopfhalters 3 aufsetzt.

Die axialen Durchbohrungen 9.2, 9.3 im Werkzeugkopf 9 weisen bevorzugt jeweils von außen nach innen zulaufende Verjüngungen auf, die für eine gute Entformbarkeit des Werkzeugkopfes 9 bei der Herstellung als Pulverpress-Erzeugnis sorgen, wobei der jeweilige Verjüngungswinkel zwischen 0,5° und 12°, bevorzugt zwischen 1° und 2°, beträgt.

Alle Hüllradien an den Randkanten des Werkzeugkopfes 9 sind aus gleichem Grund mit zwischen 0,2 und 1,0 mm vorgegeben.

Der so aus einem metallhaltigen Sinter-Pulver oder Keramik hergestellte Rohling eines Werkzeugkopfes 9 wird anschließend gesintert oder als Keramik gebrannt. Seine Abmessungen können hierbei sehr geringe Toleranzen aufweisen, sodass eine anschließende Bearbeitung durch Schleifen auf Präzisionsrundlauf und Endabmessungen nur geringe Materialdicken zu entfernen hat und folglich die Herstellungskosten gesenkt werden können.

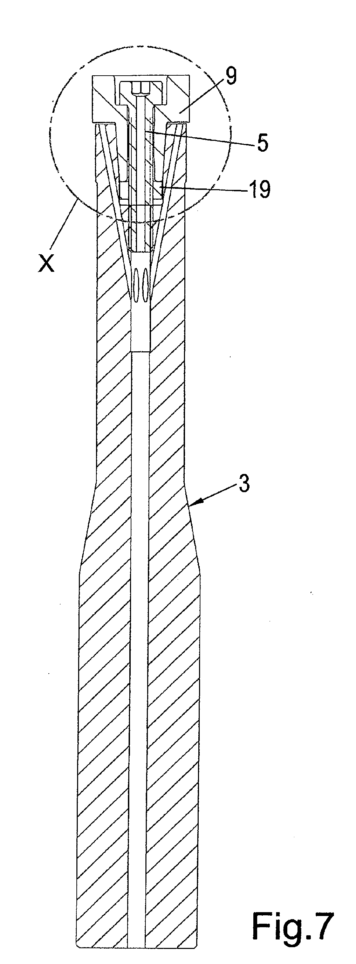

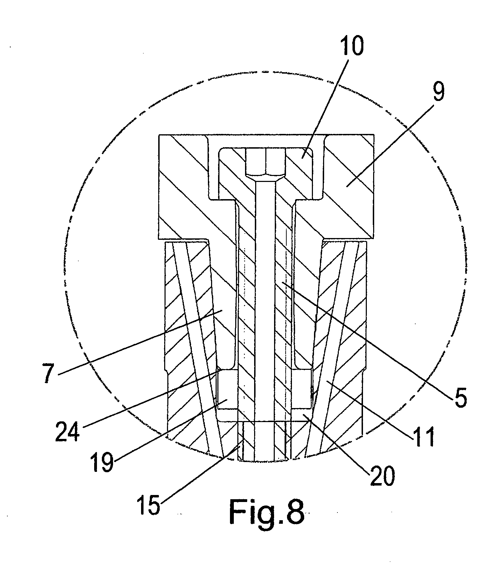

In der vierten Ausführungsform eines Wechselkopfalters 3 gemäß den Fig. 7 und 8 ist auf den Gewindeabschnitt 14 der längsdurchbohrten Befestigungsschraube 5 in der ersten Ausführungsform ein Gewindering 19 aufgeschraubt, der sich unmittelbar unterhalb des konischen Schaftes 7 des Werkzeugkopfes 9 und oberhalb des Gewindeabschnittes 15 in der axialen Kühlmittel-Bohrung 1 des Wechselkopfhalters 3 befindet und allseitig mit Spiel eingesetzt ist. Wie es das vergrößerte Detail X aus Fig. 7 in Fig. 8 zeigt ist für den Gewindering 19 zwischen dem konischen Schaft 7 und dem Beginn der axialen Kühlmittel-Bohrung 1 ein ausreichender Freiraum 20 gebildet. Der Gewindering 19 wird nach dem Einsetzen der Befestigungsschraube 5 in den Werkzeugkopf 9 auf den Gewindeabschnitt 14 der Befestigungsschraube 5 aufgeschraubt und auf dieser aufgepresst oder anderweitig festgelegt, wie z. B. durch Loctite. Der Gewindering 19 dient zum Lösen der Kegelverbindung zwischen der konischen Werkzeugaufnahme 3.1 des Wechselkopfhalters 3 und dem konischen Schaft 7 des Werkzeugkopfes 9 beim Herausnehmen des Werkzeugkopfes 9 aus dem Wechselkopfhalter 3. In diesem Fall drückt der Gewindering auf die Unterseite 24 des Werkzeugkopfes 9 und löst die Kegelverbindung. In nicht dargestellter Ausführungsform kann der Gewindering 19 auch auf eine verschlossene Befestigungsschraube 5.1 gemäß der dritten Ausführungsform aufgeschraubt werden.

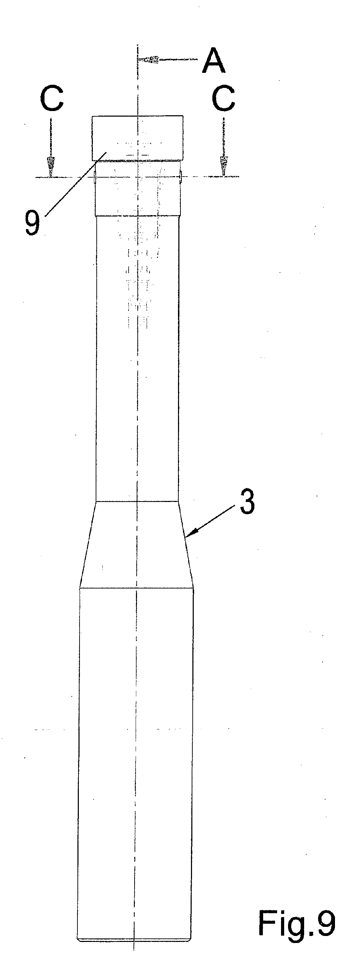

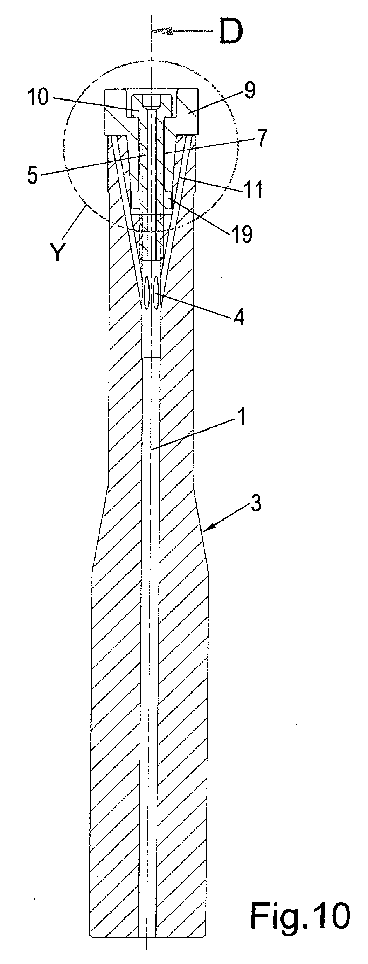

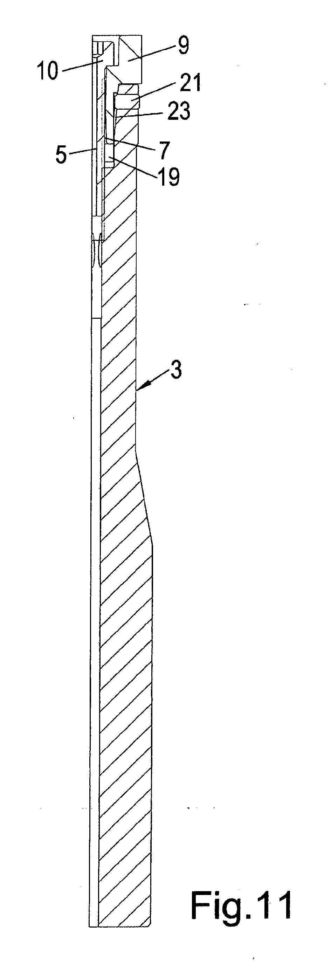

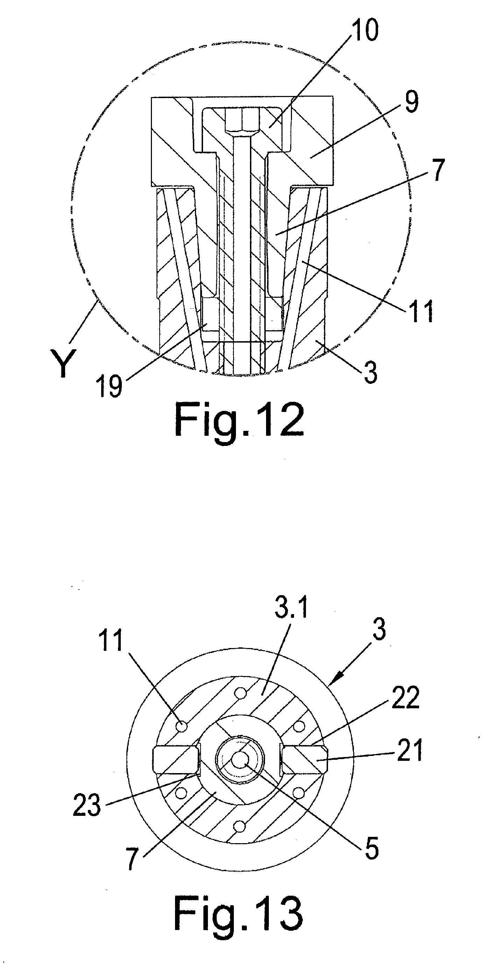

Die fünfte Ausführungsform des Wechselkopfhalters 3 mit Werkzeugkopf 9 ist in den Fig. 9 bis 13 dargestellt. In der Fig. 9 sind der Längsschnitt A- A gemäß Fig. 10 und der Querschnitt C - C gemäß Fig. 13 bezeichnet. In der Fig. 10 ist der axiale Teillängsschnitt D- D- gemäß Fig. 11 bezeichnet. Das vergrößerte Detail Y aus Fig. 10 ist in Fig. 12 gezeigt.

In der fünften Ausführungsform gemäß den Fig. 9 bis 13 sind am Umfang des oberen Endes des Wechselkopfhalters 3 und im Bereich des konischen Schaftes 7 des in die konische Werkzeugaufnahme 3.1 eingesetzten Werkzeuges 9 ein oder mehrere Mitnehmerstifte 21 radial in radiale Bohrungen 22 in der konischen Werkzeugaufnahme 3.1 des oberen Endes des Wechselkopfhalters 3 eingesetzt. Diese greifen in axiale Nuten 23 ein, die in den konischen Schaft 7 des Werkzeugkopfes 9 eingebracht sind. In der gezeigten fünften Ausführungsform sind zwei gegenüberliegend angeordnete Mitnehmerstifte 21 vorgesehen. Die Mitnehmerstifte 21 dienen als Verdrehsicherung für den Werkzeugkopf 9 in dem Wechselkopfhalter 3. Die Mitnehmerstifte 21 ersetzten die Mitnehmer 8 (Fig. 1 bis 5), die dann entfallen können. Damit wird die plane Oberfläche des oberen Randes 16 des Wechselkopfhalters 3 frei von Erhebungen, wodurch eine günstige Kühlmittelverteilung für das aus den Kühlmittelbohrungen 11 austretende Kühlmittel bewirkt wird.

In gleicher Weise wie bei der vierten Ausführungsform ist hier der Gewindering 19 auf dem Gewindeabschnitt 14 der Befestigungsschraube 5 angeordnet (Fig. 12).

### BEZUGSZEICHENLISTE

- 1: axiale Kühlmittel-Bohrung
- 2: Anstoßabstufung
- 3: Wechselkopfhalter
- 3.1: konische Werkzeugaufnahme
- 3.2: Schaft
- 4: Mündung
- 5: Befestigungsschraube, axial durchbohrt
- 5.1: Befestigungsschraube, axial verschlossen
- 6: axiale Bohrung
- 7: konischer Schaft
- 7.1: konische Oberfläche
- 8: Mitnehmer
- 9: Werkzeugkopf
- 9.1: Schraubenkopfvertiefung
- 9.2, 9.3: axiale Durchbohrung
- 9.4: Spalt
- 10: Inbus-Schraubenkopf
- 11: radiale Kühlmittelbohrung
- 12: Kanalabzweigungs-Abschnitt
- 13: Sperrhülse,
- 13.1: axiale Bohrung
- 14: Gewindeabschnitt
- 15: Gewindeabschnitt
- 16: Rand
- 17: Rand
- 18: Mitnehmernut
- 19: Gewindering
- 20: Freiraum
- 21: Mitnehmerstift
- 22: radiale Bohrung
- 23: axiale Bohrung
- 24: Unterseite
- 25: axiale Nut

## Patentansprüche

1. Wechselkopfhalter (3) zur Aufnahme in der rotierbaren Spindel einer Werkzeugmaschine, mit einer konischen Werkzeugaufnahme (3.1) für wenigstens einen auswechselbaren, in die konische Werkzeugaufnahme (3.1) mittels seines konischen Schaftes (7) einsetzbaren Werkzeugkopfes (9), der mit einer axialen Durchbohrung (9.2, 9.3) zum Einsetzen einer zentralen Befestigungs-schraube (5, 5.1) versehen ist, wobei der Wechselkopfhalter (3) eine axiale Kühlmittel-Bohrung (1) zum Zuführen eines Kühlmittels für ein Innenkühlsystem und im Bereich der konischen Werkzeugaufnahme (3.1) wenigstens eine von der axialen Kühlmittel-Bohrung (1) ausgehende, zum vorderen, oberen Rand (16) des Wechselkopfhalters (3) verlaufende radiale Kühlmittelbohrung (11) aufweist, die ein Außenkühlsystem bildet, und wobei ein Kühlsystem-Wechselmittel zum Umbauen des Wechselkopfhalters (3) von Innen- auf Außenkühlung und umgekehrt vorgesehen ist,
**dadurch gekennzeichnet**,
dass das Kühlsystem-Wechselmittel so ausgebildet ist, dass der Umbau des Wechselkopfhalters (3) auf Innen- oder Außenkühlung durch Austausch der zentralen Befestigungsschraube (5) mit einem zu wählenden Sperrmittel (5.1, 13) bei gespannt in der Spindel einer Werkzeugmaschine mit dem Werkzeugkopf (9) verbleibendem Wechselkopfhalter (3) ausführbar ist.

2. Wechselkopfhalter (3) nach Anspruch 1, **dadurch gekennzeichnet, dass** ein Kühlmittelkanal als eine durchgehende axiale Bohrung (6) in der zentralen Befestigungsschraube (5) ausgebildet und diese mit der axialen Kühlmittel-Bohrung (1) des Wechselkopfhalters (3) durchgehend verbunden und das Kühlmittel direkt zum Werkzeugkopf (9) durchgeleitet ist, wobei die Länge der zentralen Befestigungsschraube (5) so vorgegeben ist, dass diese bis zum Beginn eines zylindrischen oder konischen Kanalabzweigungs-Abschnittes (12) der axialen Kühlmittel-Bohrung (1) des Wechselkopfhalters (3) reicht, wobei in den Kanalabzweigungs-Abschnitt (12) die wenigstens eine radiale Kühlmittelbohrung (11) des Außenkühlsystems mündet, wodurch in dieser kombinierten Kühlsystem-Auswahlanordnung des Kühlsystem-Wechselmittels das Kühlmittel gleichzeitig über ein Innen- und Außenkühlsystem zugeleitet ist.

3. Wechselkopfhalter (3) nach Anspruch 2, **dadurch gekennzeichnet, dass** ein erstes Sperrmittel als eine Sperrhülse (13) mit durchgehender axialer Bohrung (13.1) ausgebildet und optional durch die axiale Kühlmittel-Bohrung (1) des Wechselkopfhalters (3) und durch die axiale Durchbohrung (9.2, 9.3) des Werkzeugkopfes (9) für die zentrale Befestigungsschraube (5) einsetzbar ist, wobei die Sperrhülse (13) in dem zylindrischen Kanalabzweigungs-Abschnitt (12) der axialen Kühlmittel-Bohrung (1) des Wechselkopfhalters (3) anordenbar ist und hierdurch die wenigstens eine radiale Kühlmittelbohrung (11) versperrt, wobei die Sperrhülse (13) im Kanalabzweigungs-Abschnitt (12) zwischen einer Anstoßabstufung (2) und dem eingeschraubten Ende der zentralen Befestigungsschraube (5) positionierbar ist, sodass in dieser Innenkühlsystem-Auswahlanordnung des Kühlsystem-Wechselmittels das Kühlmittel ausschließlich zentral durch die axiale Bohrung (6) der zentralen Befestigungsschraube (5) direkt zum Werkzeugkopf (9) durchgeleitet ist.

4. Wechselkopfhalter (3) nach Anspruch 1, **dadurch gekennzeichnet, dass** die axiale Bohrung (6) der zentralen Befestigungsschraube (5) durchgehend durchbohrt ist, wodurch diese mit der axialen Kühlmittel-Bohrung (1) des Wechselmittels zum Werkzeugkopf (9) durchgeleitet ist, wobei die Länge der zentralen Befestigungs-schraube (5) so vorgegeben ist, dass diese durch einen zylindrischen Kanalabzweigungs-Abschnitt (12) der axialen Kühlmittel-Bohrung (1) des Wechselkopfhalters (3) erstreckt ist und dadurch ein zweites Sperrmittel ausbildet, wobei in diesem Kanalabzweigungs-Abschnitt (12) die wenigstens eine radiale Kühlmittelbohrung (11) des Außenkühlsystems mündet, sodass in dieser Innenkühlsystem-Auswahlanordnung des Kühlsystem-Wechselmittels das Kühlmittel ausschließlich über das Innenkühlsystem zentral zugeleitet ist.

5. Wechselkopfhalter (3) nach Anspruch 3 oder 4, **dadurch gekennzeichnet, dass** ein drittes Sperrmittel als eine verschlossene zentrale Befestigungsschraube (5.1) vorgesehen und optional einsetzbar ist, wobei das erste bzw. zweite Sperrmittel (13) vorher entfernt ist, sodass in dieser Außenkühlsystem-Auswahlanordnung des Kühlsystem-Wechselmittels das Kühlmittel nur radial durch die wenigstens eine radiale Kühlmittelbohrung (11) zum Werkzeugkopf (9) durchgeleitet ist.

6. Wechselkopfhalter (3) nach einem vorhergehenden Anspruch, **dadurch gekennzeichnet, dass** der Werkzeugkopf (9) einstückig ausgebildet ist.

7. Wechselkopfhalter (3) nach einem vorhergehenden Anspruch 1 bis 4, **dadurch gekennzeichnet, dass** der Werkzeugkopf (9) mehrstückig mit Schneidelementen aus Hartmetall ausgebildet ist.

8. Wechselkopfhalter (3) nach einem vorhergehenden Anspruch, **dadurch gekennzeichnet, dass** der Werkzeugkopf (9) aus Hartmetall oder Keramik ausgebildet ist.

9. Wechselkopfhalter (3) nach einem vorhergehenden Anspruch,
**dadurch gekennzeichnet, dass** der Werkzeugkopf (9) aus einem gepressten Sinter-Pulverstoff einstückig ausgebildet ist.

10. Wechselkopfhalter (3) nach einem vorhergehenden Anspruch,
**dadurch gekennzeichnet, dass** der Werkzeugkopf (9) als ein Werkzeug zum Reiben, Bohren, Senken oder Fräsen ausgebildet ist.

11. Wechselkopfhalter nach einem vorhergehenden Anspruch,
**dadurch gekennzeichnet, dass** ein zylindrischer oder konusförmiger Schaft (3.2) zur Aufnahme in der Spindel einer Werkzeugmaschine vorgesehen ist.

12. Wechselkopfhalter (3) nach einem vorhergehenden Anspruch,
**dadurch gekennzeichnet, dass** die konische Werkzeugaufnahme (3.1) des Wechselkopfhalters (3) und der konische Schaft (7) des einsetzbaren Werkzeugkopfes (9) miteinander nur entlang ihrer konischen Oberflächen (7.1) in Berührung sind.

13. Wechselkopfhalter (3) nach einem vorhergehenden Anspruch,
**dadurch gekennzeichnet, dass** der Verjüngungswinkel der konischen Werkzeugaufnahme (3.1) des Wechselkopfhalters (3) und des konischen Schaftes (7) des einsetzbaren Werkzeugkopfes (9) zwischen 10° und 14°, bevorzugt 12°, beträgt.

14. Wechselkopfhalter (3) nach einem oder mehreren der vorangegangenen Ansprüche, **dadurch gekennzeichnet, dass** auf einen Gewindeabschnitt (14) der Befestigungsschraube (5, 5.1) ein Gewindering (19) aufgeschraubt und unmittelbar unterhalb des konischen Schaftes (7) des Werkzeugkopfes (9) auf dem Gewinde-abschnitt (14) festgelegt ist, wobei für den Gewindering (19) unterhalb des Werkzeugkopfes (9) ein Freiraum (20) ausgebildet ist.

15. Wechselkopfhalter (3) nach einen oder mehreren der vorangegangenen Ansprüche, **dadurch gekennzeichnet, dass** am Umfang des oberen Endes des Wechselkopfhalters (3) und im Bereich des konischen Schaftes (7) des Werkzeugkopfes (9) mindestens ein Mitnehmerstift (21) als Verdrehsicherung radial in die konische Werkzeugaufnahme (3.1) eingesetzt ist und dass in den konischen Schaft (7) des Werkzeugkopfes (9) eine den Mitnehmerstift (21) aufnehmende axiale Nut (25) eingebracht ist.

16. Werkzeugkopf (9) für den Wechselkopfhalter (3) nach einem der vorhergehenden Ansprüche, **dadurch gekennzeichnet, dass** der Werkzeugkopf (9) als ein gepresster und/oder gesinterter einstückiger Werkzeugkopf (9) aus einem Pulverstoff ausgebildet ist.

17. Werkzeugkopf (9) nach einem vorhergehenden Anspruch, **dadurch gekennzeichnet, dass** die längsaxiale Durchbohrung (9.2, 9.3) jeweils von beiden Seiten von außen nach innen verjüngt ausgebildet ist, um dadurch eine leichte Entformbarkeit des gepressten Werkzeugkopfelementes (9) zu gewährleisten, wobei der jeweilige Gesamtverjüngungswinkel zwischen 0,5° und 12°, bevorzugt zwischen 0,5° und 2°, vorgegeben ist.

18. Werkzeugkopf nach einem vorhergehenden Anspruch, **dadurch gekennzeichnet, dass** eine radial von außen ausgebildete Mitnehmernut vorgesehen ist, die von außen nach innen verjüngt ausgebildete Seitenwandungen aufweist, um dadurch eine leichte Entformbarkeit des gepressten Werkzeugkopfes (9) zu gewährleisten, wobei der Gesamtverjüngungswinkel zwischen 0,5° und 5°, bevorzugt zwischen 0,5° und 2°, vorgegeben ist.

19. Werkzeugkopf nach einem vorhergehenden Anspruch, **dadurch gekennzeichnet, dass** die Hüllradien an den Randkanten des Werkzeugkopfelementes (9) zwischen 0,2 und 1,0 mm betragen.

20. Verfahren zur Wahl des Kühlsystems eines Wechselkopfhalters nach einem vorhergehenden Anspruch bei einem in einer Spindel einer Werkzeugmaschine eingespannten und auszentrierten Wechselkopfhalter, **dadurch gekennzeichnet, dass**
- die zentrale Befestigungsschraube (5) mit einem Schraubwerkzeug herausgeschraubt wird,
- und dann wahlweise ein erstes, zweites oder drittes Sperrmittel (5, 5.1, 13) eingesetzt und die gewählte Befestigungsschraube (5, 5.1) eingeschraubt wird, sodass eines von den drei Kühlsystemeinstellungen vorgegeben wird:
a) nur Innenkühlsystem, b) nur Außenkühlsystem, oder c) Innen- und Außenkühlsystem,
wobei der Werkzeugkopf (9) in seinem durch Konussitz-Verbindung bewirkten kraftschlüssigen Sitz im Wechselkopfhalter (3) unverschoben verbleiben kann oder optional der Werkzeugkopf(9) ausgetauscht wird.
